# EUROPÄISCHE PATENTSCHRIFT

(11) **EP 3 138 703 B1**
(45) Veröffentlichungstag und Bekanntmachung des Hinweises auf die Patenterteilung: **04.11.2020**
(21) Anmeldenummer: 16179356.7
(22) Anmeldetag: 13.07.2016
(51) Int. Cl.: B60C 23/04

(54) **REIFENDRUCKKONTROLLSYSTEM FÜR EIN FAHRZEUG**
TYRE PRESSURE CONTROL SYSTEM FOR A VEHICLE
SYSTEME DE CONTROLE DE PRESSION DE PNEU POUR UN VEHICULE AUTOMOBILE

(30) Priorität: 25.08.2015 DE 102015114101
(43) Veröffentlichungstag der Anmeldung: 08.03.2017
(73) Patentinhaber: Huf Baolong Electronics Bretten GmbH, 75015 Bretten (DE)
(72) Erfinder: GORENZWEIG, Herr Igor, 42109 Wuppertal (DE); MÖNIG, Herr Stefan, 58332 Schwelm (DE)
(74) Vertreter: Zenz Patentanwälte Partnerschaft mbB

(56) Entgegenhaltungen:
- WO-A1-2014/108926
- WO-A1-2016/198373
- US-A- 6 055 855
- US-A1- 2012 304 755

## Beschreibung

Die Erfindung richtet sich auf ein Reifendruckkontrollsystem für ein Fahrzeug zur Ermittlung reifenspezifischer Parameter, gemäß dem unabhängigen Anspruchs 1.

Das Dokument WO 2016/198373 A1, das jedoch erst nach dem Anmeldetag der Erfindung veröffentlich worden und für die Frage der erfinderischen Tätigkeit nicht von Bedeutung ist, offenbart ein Reifendruckkontrollsystem für ein Fahrzeug zur Ermittlung reifenspezifischer Parameter, wobei das Reifendruckkontrollsystem ein plastisch verformbares Klemmelement umfasst, das ein Außengewinde des Ventilschafts des Reifenventils einklemmt.

Ferner ist aus der US 2012/0304755 A1 ein Reifendruckkontrollsystem mit einem neigbaren Ventilschaft bekannt. Das Reifendruck-kontrollsystem umfasst einen Hauptkörper mit einem Kanal, der ein an seinem nahe liegenden Ende angeordnetes Sockelsegment aufweist, wobei der Ventilschaft bewegbar an einer Felge befestigt ist und ein gewölbtes und bewegbar in dem Sockelelement aufgenommenes Ende aufweist. Das gewölbte Ende weist eine axial durchgehende Gewindebohrung auf. Ferner ist ein Positionierbolzen vorgesehen, welcher in dem Kanal von einem gegenüberliegenden Ende positioniert ist und mit der Gewindebohrung derart verbunden ist, dass das gewölbte Ende des Ventilschafts bewegbar in dem Sockelelement positioniert ist und bei Bewegung des gewölbten Endes ein Winkel zwischen dem verbundenen Ventilschaft und dem Hauptkörper verändert wird, wodurch der Hauptkörper an der Felge anliegen kann.

Ferner ist aus der US 6,055,855 ein Reifendruckkontrollsystem bekannt, welches an einer Felge eines Fahrzeugreifens montiert ist. Das Reifendruckkontrollsystem umfasst einen Reifendrucksensor, einen ersten und zweiten Gewindeverschluss und einen Reifenventilschaft. Der Reifendrucksensor weist ein Gehäuse mit einer Aussparung auf. Der erste Gewindeverschluss ist in der Aussparung montiert und weist einen ersten Gewindeabschnitt auf, der sich entlang einer Achse erstreckt. Der erste Gewindeverschluss und das Gehäuse haben Flächen, welche eine Drehung des ersten Gewindeverschlusses um die Achse blockieren. Der Reifenventilschaft ragt durch eine erste Öffnung in der Felge und durch eine zweite Öffnung in dem Gehäuse in die Aussparung hinein. Der Reifenventilschaft umfasst einen zweiten Gewindeabschnitt für einen Gewindeeingriff mit dem ersten Gewindeabschnitt, wenn der erste Gewindeabschnitt relativ zu dem zweiten Gewindeabschnitt um die Achse gedreht wird. Der Reifenventilschaft und der erste Gewindeverschluss klemmen einen Teil des Gehäuses zwischen dem Reifenventilschaft und dem ersten Gewindeverschluss ein, wenn der erste und zweite Gewindeabschnitt zusammengeschraubt werden.Ein Reifendruckkontrollsystem ist zum Beispiel auch aus der WO 2014/108926 A1 bekannt. Ferner ist aus der EP 1 277 601 ein System bekannt, welches vorsieht, an der Innenseite einer Überwurfmutter einen Vorsprung als Sollbruchstelle auszubilden. Die Überwurfmutter wird über den Ventilschaft geführt und auf den Gewindeabschnitt des Ventilschafts aufgeschraubt. Der innere Vorsprung an der Überwurfmutter läuft beim Aufschrauben der Überwurfmutter auf das Reifenventil ab einer bestimmten Stellung auf den Gewindebeginn des Reifenventils auf, so dass der Ventilschaft mit der Überwurfmutter mitgedreht wird. Durch das Mitdrehen wird eine Verschraubung des Ventilschafts auf der Innenseite der Felge mit einem Schraubelement des Reifendrucksensors erreicht. Ist dort das Schraubelement bis zum Anschlag eingedreht, steigt das Drehmoment zwischen Überwurfmutter und Ventilschaft an, so dass der Vorsprung der Überwurfmutter abgeschert wird und die Überwurfmutter weiter auf den Ventilschaft aufgeschraubt werden kann, bis die Überwurfmutter an der Felge anliegt und das Reifenventil an der Felge fixiert ist. Da der Vorsprung innenseitig der Überwurfmutter ausgebildet ist, ist diese Sollbruchstelle für die Montage nicht sichtbar, was dazu führen kann, dass eine Überwurfmutter verwendet wird, bei welcher der Vorsprung bereits abgeschert ist, so dass die Überwurfmutter zur Wiederverwendung ungeeignet ist. Darüber hinaus sieht dieser Stand der Technik eine Wiederverwendbarkeit der Überwurfmutter nach deren erster Verwendung bei einem Reifendruckkontrollsystem überhaupt nicht vor, so dass die Überwurfmutter eine Art Einwegteil darstellt, welches bei Wiederverwendung des Systems ausgetauscht werden muss und daher ökonomisch und ökologisch von Nachteil ist.

Ausgehend von diesem Stand der Technik liegt der Erfindung die Aufgabe zugrunde eine Lösung zu schaffen, die auf konstruktiv einfache Weise und kostengünstig ein Reifendruckkontrollsystem bereitstellt, welches eine einfache und zuverlässige Montage gewährleistet und darüber hinaus die Wiederverwendbarkeit aller Bauteile auch nach einmaliger Montage ermöglicht.

Die vorstehend gestellte Aufgabe wird erfindungsgemäß durch ein Reifendruckkontrollsystem für ein Fahrzeug zur Ermittlung reifenspezifischer Parameter, gemäß dem unabhängigen Anspruchs 1 gelöst.

Vorteilhafte und zweckmäßige Ausgestaltungen und Weiterbildungen der Erfindung ergeben sich aus den Unteransprüchen.

Durch die Erfindung wird ein Reifendruckkontrollsystem zur Verfügung gestellt, welches sich durch eine funktionsgerechte Konstruktion auszeichnet und einen einfachen und kostengünstigen Aufbau aufweist. Im Unterschied zu Systemen aus dem Stand der Technik, bei denen eine Sollbruchstelle im Inneren einer Überwurfmutter ausgebildet ist, was lediglich eine einmalige Verwendung der Überwurfmutter gestattet, ist bei der vorliegenden Erfindung ein elastisch verformbares Klemmelement vorgesehen, welches den Ventilschaft des Reifenventils einklemmt und klemmend innerhalb der Überwurfmutter angeordnet ist. Dadurch ist es möglich, in einem ersten Montagezyklus durch Drehung der Überwurfmutter das Schraubmittel in das Reifenventil einzuschrauben, um den Reifendrucksensor innenseitig der Felge am Felgenbett zu fixieren. Denn das Klemmelement sorgt für eine drehfeste Verbindung zwischen der Überwurfmutter und dem Reifenventil. Dabei wird die Überwurfmutter zunächst mit zumindest einer Drehung um 90° bis max. 360° auf den Gewindeabschnitt des Ventilschafts aufgeschraubt, bevor eine gemeinsame Drehung von Überwurfmutter und Reifenventil erfolgt. Das Ein- und Festschrauben des Schraubmittels erfolgt mit einem Drehmoment von 2,1 bis 2,5 Newtonmeter, wobei nach Erreichen einer Anschlagposition des Schraubmittels am Gehäuse des Reifendrucksensors das Drehmoment zwischen Überwurfmutter und Klemmelement steigt und bei Erreichen eines Montagedrehmoments, welches zumindest vier Newtonmeter beträgt, die Klemmverbindung zwischen Überwurfmutter und Klemmelement gelöst bzw. unterbrochen ist, weil sich das Klemmelement aufgrund der Höhe des Montagedrehmoments elastisch verformt und nachgibt. Dadurch ist die Überwurfmutter relativ zu dem Klemmelement drehbar und kann weiter auf den Gewindeabschnitt des Ventilschafts aufgeschraubt werden, bis die Überwurfmutter außenseitig an der Felge anliegt, wodurch dann das Reifendruckkontrollsystem an der Felge befestigt ist. Dadurch, dass das Klemmelement elastisch verformbar ausgebildet ist, ist eine mehrmalige Verwendung bei Montage desselben Klemmelements möglich. Darüber hinaus führt die Verwendung eines Klemmelements innerhalb der Überwurfmutter zu einer Erhöhung der außen am Reifenventil angebrachten Masse, wodurch der Schwerpunkt des Reifendruckkontrollsystems insgesamt nach außen verlagert wird, was die technischen Eigenschaften des Systems bei höheren Fahrzeuggeschwindigkeiten steigert.

Zur Erhöhung der durch das Klemmelement ausgebübten Klemmverbindung sieht die Erfindung in Ausgestaltung vor, dass im Inneren der Überwurfmutter eine eine Bewegung des zumindest einen Klemmelements in wenigstens eine Längsrichtung der Überwurfmutter blockierende Fixierungseinrichtung ausgebildet ist. Dadurch, dass eine Bewegung des Klemmelements in zumindest eine Längsrichtung unterbunden ist, ist die Gefahr einer Lockerung der Klemmverbindung reduziert. Darüber hinaus bietet die Fixierungseinrichtung die Möglichkeit einer genau definierten Positionierung des Klemmelements innerhalb der Überwurfmutter.

Bei einer ersten Ausführungsform der Erfindung ist vorgesehen, dass die Fixierungseinrichtung von Aufnahmeausnehmungen gebildet ist und das zumindest eine Klemmelement zwei Federstifte umfasst, die in den Aufnahmeausnehmungen befestigt sind und die den Ventilschaft an sich gegenüberliegenden Umfangpositionen des Ventilschafts zwischen sich drehfest einklemmen. Dabei können die Federstifte austauschbar ausgebildet sein, so dass sie gegebenenfalls bei Wiederverwendung der Überwurfmutter für einen anderen Anwendungsfall durch speziell an den Fall angepasst Federstifte ausgetauscht werden.

Die Erfindung sieht in alternativer Ausgestaltung der Fixierungseinrichtung für das Klemmelement vor, dass die Fixierungseinrichtung eine in der Innenfläche der Überwurfmutter ausgebildete Stufe ist, an welcher sich das zumindest eine Klemmelement abstützt. Eine solche Stufe ist wesentlich einfacher herzustellen als in der Wandung der Überwurfmutter ausgebildete Aufnahmeausnehmungen, so dass eine stufige Ausgestaltung kostengünstiger herzustellen ist.

Bei einer zweiten Ausführungsform der Erfindung ist ferner vorgesehen, dass das zumindest eine Klemmelement ein kreissegmentförmiges Einlegeteil, welches sich mit einer seiner beiden Längsränder an der Stufe der Überwurfmutter abstützt, und an dem kreissegmentförmigen Einlegeteil radial nach innen gerichtete, den Ventilschaft festklemmende und mit diesem eine drehfeste Verbindung eingehende Federarme umfasst, wobei das Einlegeteil mit seiner Außenwandung bis zum vorbestimmten Montagedrehmoment an der Innenfläche der Überwurfmutter drehfest verbunden anliegt. Die elastisch verformbaren Federarme sorgen dabei für einen sicheren Halt des Ventilschafts an dem Klemmelement, so dass nach dem Einstecken des Ventilschafts in das Klemmelement eine drehfeste Verbindung zwischen Ventilschaft und Klemmelement für die Montage hergestellt ist.

In weiterer Ausgestaltung der zweiten Ausführungsform ist es dann von Vorteil, wenn ein jeweiliger Federarm an seinem den Ventilschaft festklemmenden Ende mit einer die Haftreibung mit dem Ventilschaft erhöhenden Reibfläche ausgestattet ist. Dies sorgt für eine weitere Sicherstellung, dass die Verbindung zwischen Ventilschaft und Klemmelement während der Montage drehfest ausgeführt ist.

Bei einer dritten Ausführungsform sieht die Erfindung vor, dass das zumindest eine Klemmelement ein kreissegmentförmiges Einlegeteil ist, welches sich mit einem seiner beiden Längsränder an der Stufe der Überwurfmutter abstützt, wobei das Einlegeteil zumindest zwei stegförmige Ansätze aufweist, die um den Außenumfang herum verlaufend ausgebildet sind und zwischen sich eine Ausnehmung definieren. Diese beiden stegförmigen Ansätze können zusätzlich zu ihrer Funktion, das Klemmelement mit der Überwurfmutter bis zu dem vorbestimmten Montagedrehmoment drehfest zu verbinden, dafür sorgen, dass das Innere der Überwurfmutter abgedichtet ist, was die Lebensdauer der Gewindeverbindung zwischen Überwurfmutter und Reifenventil erhöhen kann.

In Weiterbildung der dritten Ausführungsform ist es erfindungsgemäß von Vorteil, wenn das zumindest eine Klemmelement mit seinem Innenumfang in klemmender Weise auf den Ventilschaft mit diesem eine drehfeste Verbindung eingehend aufgeschoben ist und mit seinen zumindest zwei stegförmigen Ansätzen an der Innenfläche der Überwurfmutter bis zum vorbestimmten Montagedrehmoment mit dieser drehfest sowie klemmend verbunden anliegt.

Für die zweite und dritte Ausführungsform ist es gemäß einer Ausgestaltung von besonderem Vorteil, wenn zwischen der Stufe der Überwurfmutter und dem kreissegmentförmigen Einlegeteil ein das Innere der Überwurfmutter zu der dem Reifendrucksensor abgewandten Seite abdichtender Dichtungsring angeordnet ist, der auf den Ventilschaft aufgeschoben ist. Der Dichtungsring sorgt dafür, dass das Innere der Überwurfmutter abgedichtet ist, und bringt den Vorteil, dass die Lebensdauer der Gewindeverbindung zwischen Überwurfmutter und Reifenventil erhöht werden kann.

Bei einer vierten Ausführungsform sieht die Erfindung vor, dass das zumindest eine Klemmelement ein ringförmiges Einspritzteil ist, welches mit seinem Innenumfang in klemmender Weise auf den Ventilschaft mit diesem eine drehfeste Verbindung eingehend aufgeschoben ist und mit seinem Außenumfang an der Innenfläche der Überwurfmutter bis zum vorbestimmten Montagedrehmoment mit dieser drehfest verbunden anliegt. Bei dem ringförmigen Einspritzteil handelt es sich um die geometrisch einfachste Form eines Teils, welches mit Hilfe bekannter Verfahren auf einfache Weise herstellbar ist, zumal es sich bei dem Teil um ein Bauteil aus Kunststoff handeln kann, was im Spritzgussprozess hergestellt werden kann.

Schließlich ist es in Ausgestaltung der Erfindung von Vorteil, wenn das vorbestimmte Montagedrehmoment wenigstens vier Newtonmeter beträgt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1 den hinteren Teil eines Fahrzeugs mit einer Felge, einem Luftreifen und einem Reifenventil,
Figur 2 eine perspektivische Darstellung auf eine Felge, an der ein Reifendruckkontrollsystem gemäß der vorliegenden Erfindung angebracht ist,
Figur 3 eine Perspektivansicht auf das erfindungsgemäße Reifendruckkontrollsystem, wobei der Konturverlauf der Felge lediglich angedeutet ist,
Figur 4 eine perspektivische Einzelteildarstellung des erfindungsgemäßen Reifendruckkontrollsystems,
Figur 5 einen ersten Montageschritt, bei dem das Reifenventil, an dem ein Reifendrucksensor angebracht ist, durch ein Durchgangsloch in der Felge gesteckt wird,
Figur 6 einen zweiten Montageschritt, bei dem das Reifenventil innenseitig an die Felge gedrückt wird und eine Überwurfmutter über den durchgesteckten Abschnitt des Reifenventils gesteckt wird,
Figur 7 einen dritten Montageschritt, bei dem die Überwurfmutter auf einen Ventilschaft aufgeschoben wird,
Figur 8 einen vierten Montageschritt, bei dem der Reifendrucksensor an das Felgenbett gedrückt wird,
Figur 9 einen fünften Montageschritt, bei dem das Schraubelement mit dem Reifendrucksensor verschraubt wird,
Figur 10 einen sechsten Montageschritt, bei dem ein vorbestimmtes Montagedrehmoment erreicht wird und eine drehfeste Verbindung zwischen Überwurfmutter und Ventilkörper ausgehoben ist, so dass die Überwurfmutter mit der Felge fest verschraubt werden kann,
Figur 11 in perspektivischer Ansicht auf eine erste Ausführungsform eines Klemmelements,
Figur 12 eine weitere perspektivische Ansicht auf die erste Ausführungsform des Klemmelements,
Figur 13 eine Überwurfmutter der ersten Ausführungsform in Schnittansicht mit darin eingebrachten Klemmelementen und Dichtungsring,
Figur 14 eine Schnittansicht des Reifenventils mit Überwurfmutter und Klemmelementen gemäß der ersten Ausführungsform des Reifendruckkontrollsystems,
Figur 15 eine perspektivische Schnittansicht einer Überwurfmutter gemäß weiterer Ausführungsformen,
Figur 16 ein Klemmelement gemäß einer zweiten Ausführungsform in Perspektivansicht,
Figur 17 das Klemmelement aus Figur 16 zusammen mit der Überwurfmutter in perspektivischer Ansicht,
Figur 18 eine seitliche Schnittansicht des Reifenventils und der Überwurfmutter zusammen mit dem Klemmelement gemäß der zweiten Ausführungsform in Perspektivansicht,
Figur 19 eine weitere perspektivische Ansicht der zweiten Ausführungsform,
Figur 20 ein Klemmelement gemäß einer dritten Ausführungsform zusammen mit der Überwurfmutter in Perspektivansicht,
Figur 21 in perspektivischer Ansicht die dritte Ausführungsform des Klemmelements zusammen mit einem Dichtungsring,
Figur 22 in perspektivischer Ansicht die Überwurfmutter in Schnittdarstellung zusammen mit dem Klemmelement gemäß der dritten Ausführungsform und dem Dichtungsring,
Figur 23 eine Schnittdarstellung der dritten Ausführungsform für Reifenventil, Überwurfmutter und Klemmelement in Perspektivansicht,
Figur 24 eine Überwurfmutter und ein Klemmelement gemäß einer vierten Ausführungsform in Perspektivansicht,
Figur 25 das Klemmelement und die Einspritzmasse in Perspektivansicht und
Figur 26 in perspektivischer Ansicht die Überwurfmutter in Schnittdarstellung zusammen mit dem Reifenventil und dem Klemmelement gemäß der vierten Ausführungsform.

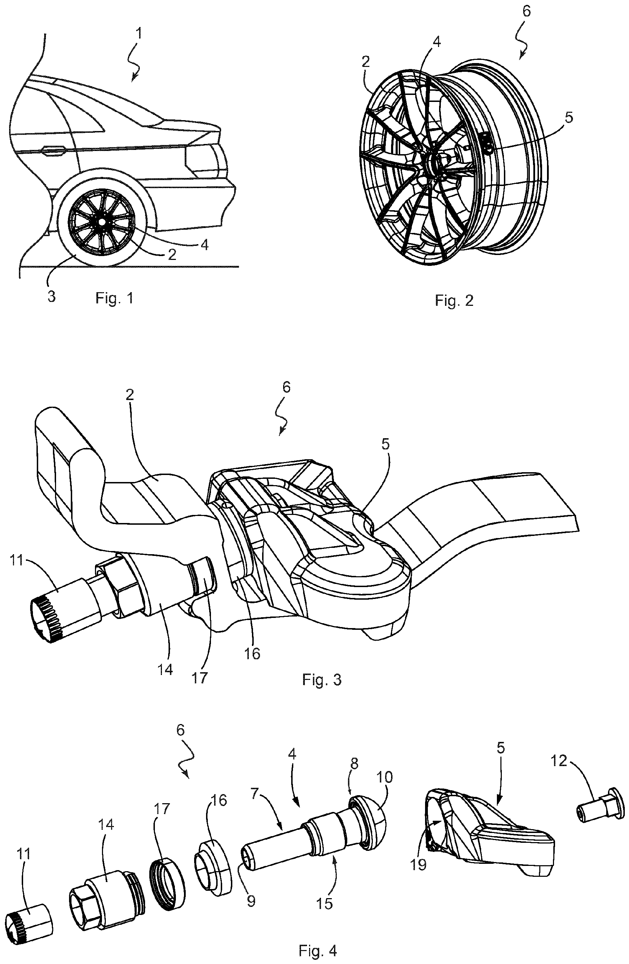

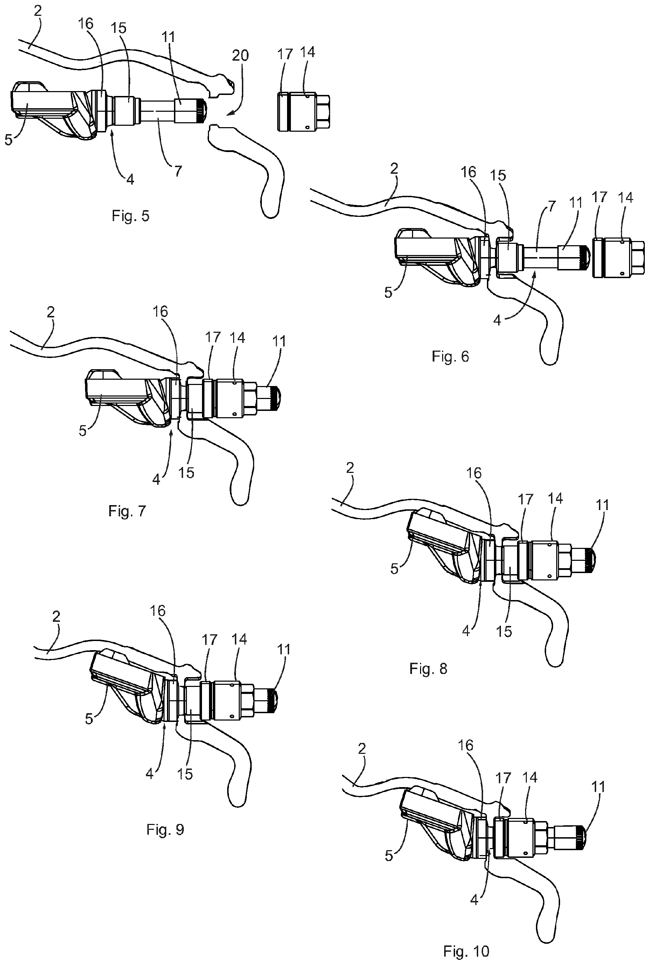

In Figur 1 ist das Heck eines Fahrzeugs 1 und ein auf einer Felge 2 sitzender, hinterer Luftreifen 3 zu sehen. Aus der Felge 2 ragt ein Reifenventil 4 hervor, an dessen Ventilfuß 8 (siehe Figur 4) ein Reifendrucksensor 5 befestigt ist, wie es aus den Figuren 2 und 3 ersichtlich ist. Figur 3 zeigt dabei eine Ansicht eines erfindungsgemäßen Reifendruckkontrollsystems 6, wobei der Konturverlauf der Felge 2 aus Gründen einer besseren Übersichtlichkeit in der Figur 3 nur angedeutet ist. In Figur 4 ist das erfindungsgemäße Reifendruckkontrollsystem 6 ebenfalls in einer perspektivischen Darstellung gezeigt, allerdings hier in einer Einzelteildarstellung. In der Felge 2 ist eine lediglich aus den Figuren 5 bis 10 ersichtliche Durchgangsöffnung 20 ausgeformt, durch die ein Ventilschaft 7 des Reifenventils 4 gesteckt ist. Das Reifenventil 4 weist eine axial verlaufende Ventilbohrung 9 (siehe unter anderem Figur 4) auf, die in einer kalottenartigen Stirnfläche 10 des Ventilfußes 8 mündet. An dem dem Ventilfuß 8 fernen Ende des Reifenventils 4 ist eine Ventilkappe 11 auf das Ende aufschraubbar. Der Reifendrucksensor 5 ist über ein Schraubelement 12, welches zum Beispiel eine Hohlschraube sein kann, in bekannter Weise an dem Reifenventil 4 fixiert, indem das Schraubelement 12 in die Ventilbohrung 9 eingeschraubt wird. Dabei ist die kalottenartige Stirnfläche 10 des Ventilfußes 8 in einer Kaverne 19 des Gehäuses des Reifendrucksensors 5 (siehe zum Beispiel Figur 4) angeordnet. Auf der anderen Seite der Felge 2 ist das Reifenventil 4 mit Hilfe einer Überwurfmutter 14 an der Felge 2 fixiert, die auf einen Gewindeabschnitt 15 aufgeschraubt wird, der auf dem Ventilschaft 7 des Reifenventils 4 ausgebildet ist. Zwischen dem Ventilfuß 8 und der Felge 2 ist ein elastischer Ring 16 auf den Ventilschaft 7 aufgeschoben, der innenseitig der Felge 2 eine Art Dämpfer zwischen Felge 2 und Reifendrucksensor 5 darstellt und die Felge 2 von innen abdichtet. Außenseitig der Felge 2 ist ein Felgenschutzring 17 angeordnet, der ebenfalls auf den Ventilschaft 7 aufgeschoben ist und zwischen der Überwurfmutter 14 und der Felge 2 angeordnet ist. Der Felgenschutzring 17 dient dem Schutz der Felge 2 vor Beschädigung bei einem zu hohen Anzugsdrehmoment der Überwurfmutter 14 und dichtet zusätzlich die Durchgangsöffnung 20 der Felge 2 ab. Erfindungsgemäß ist innerhalb der Überwurfmutter 14 zumindest ein elastisch verformbares Klemmelement 18 angeordnet, welches das Reifenventil 4 mit der Überwurfmutter 14 bis zu einem vorbestimmten Montagedrehmoment drehfest miteinander verbindet, worauf nachstehend noch im Detail eingegangen wird.

Zuvor ist in den Figuren 5 bis 10 in schematischer Weise der Montageverlauf des erfindungsgemäßen Reifendruckkontrollsystems 6 an der Felge 2 gezeigt. Vor der eigentlichen Montage ist bereits der Reifendrucksensor 5 mit dem Reifenventil 4 verschraubt, wobei die Verschraubung noch relativ locker ist und eine relative Bewegung zwischen dem Reifenventil 4 und dem Reifendrucksensor 5 erlaubt. Mit anderen Worten erlaubt die kalottenartige Stirnfläche 10 des Ventilfußes 8, die in der Kaverne 19 des Reifendrucksensors 5 angeordnet ist, eine relative Schwenkbewegung. In einem ersten Montageschritt (siehe Figur 5) wird das Reifenventil 4 durch eine Durchgangsöffnung 20 in der Felge 2 durchgesteckt, so dass der Gewindeabschnitt 15 des Ventilschafts 7 auf der anderen (außen liegenden) Seite der Felge 2 angeordnet ist, wie es in Figur 6 gezeigt ist. In einem zweiten Montageschritt (siehe Figur 6) wird dann das Reifenventil 4 innenseitig an die Felge 2 gedrückt. Ferner wird in einem dritten Montageschritt (siehe Figur 7) die Überwurfmutter 14 auf den durch die Durchgangsöffnung 20 hindurchgesteckten Ventilschaft 7 mit dem angrenzenden Gewindeabschnitt 15 aufgesteckt. Dabei wird die Überwurfmutter 14 auf den Gewindeabschnitt 15 des Reifenventils 4 aufgeschraubt, wobei das Aufschrauben mit weniger als einer vollen Umdrehung (<360°) erfolgt. Denn eine unvollständige Umdrehung reicht aus, um eine drehfeste Verbindung des Klemmelements 18 mit dem Reifenventil 4 und der Überwurfmutter 14 herzustellen, worauf nachstehend noch im Detail eingegangen wird. In einem vierten Montageschritt (siehe Figur 8) wird der Reifendrucksensor 5 an das Felgenbett der Felge 2 angedrückt, so dass das Gehäuse des Reifendrucksensors 5 auf dem Felgenbett aufliegt. Anschließend wird in einem fünften Montageschritt (siehe Figur 9) das Schraubelement 12 mit dem Reifendrucksensor verschraubt, indem die Überwurfmutter 14 gedreht wird. Die Überwurfmutter 14 ist erfindungsgemäß über das Klemmelement 18 mit dem Ventilschaft 7 bis zu einem vorbestimmten Montagedrehmoment drehfest verbunden, so dass eine anfängliche Drehbewegung der Überwurfmutter 14 zu einem Festziehen des Schraubelements 12 führt, bis das Schraubelement 12 bis zu einem Anschlag am Gehäuse des Reifendrucksensors 5 eingeschraubt ist. Auf diese Weise wird eine Verschraubung des Ventilschafts 7 auf der Innenseite der Felge 2 mit dem Schraubelement 12 des Reifendrucksensors 5 erreicht. Ist dort das Schraubelement 12 bis zum Anschlag eingedreht, so steigt das Drehmoment zwischen dem Klemmelement 18 und der Überwurfmutter 14 über das vorbestimmte Montagedrehmoment an, so dass das Klemmelement 18 sich elastisch verformt und die Klemmverbindung zwischen Klemmelement 18 und Überwurfmutter 14 gelöst wird, wodurch die Überwurfmutter 14 weiter auf den Gewindeabschnitt 15 des Ventilschafts 7 aufgeschraubt werden kann, bis die Überwurfmutter 14 an der Felge 2 anliegt und das Reifenventil 4 an der Felge 2 fixiert ist (siehe Figur 10).

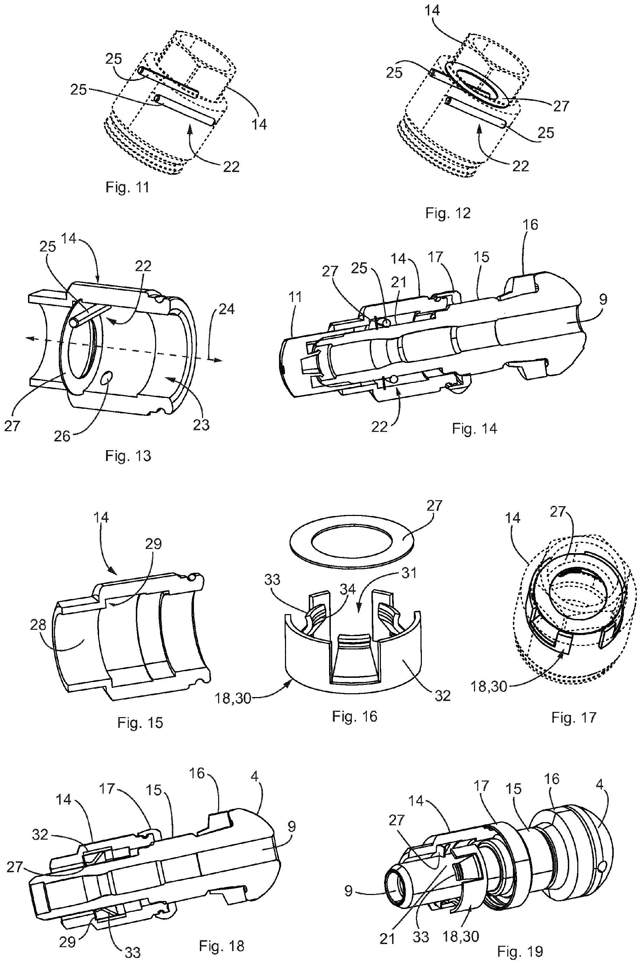

In den Figuren 11 bis 26 sind verschiedene Ausführungsformen des erfindungsgemäßen Klemmelements 18 dargestellt. Diese Ausführungsformen weisen als Gemeinsamkeit auf, dass das Klemmelement 18 elastisch verformbar ausgebildet ist und innerhalb der Überwurfmutter 14 angeordnet ist. Mit Hilfe einer Fixierungseinrichtung 22, die im Inneren 23 (siehe zum Beispiel Figur 13) der Überwurfmutter 14 ausgebildet ist, ist eine Bewegung des Klemmelements 18 in wenigstens eine Längsrichtung 24 (siehe zum Beispiel Figur 13) der Überwurfmutter 14 blockiert. Innerhalb der Überwurfmutter 14 klemmt das Klemmelement 18 den Ventilschaft 7 ein, wenn dieser in die Überwurfmutter 14 eingesteckt ist. Dabei wird ein gewindefreier Abschnitt 21 (siehe zum Beispiel Figur 14) des Ventilschafts 7 von dem Klemmelement 18 eingeklemmt. Um die wie vorstehend beschriebene Montage durchführen zu können, ist es erfindungsgemäß ferner vorgesehen, dass die Überwurfmutter 14 und der gewindefreie Abschnitt 21 des Ventilschafts 7 über das Klemmelement 18 bis zu einem vorbestimmten Montagedrehmoment drehfest miteinander verbunden sind. Erst wenn das vorbestimmte Montagedrehmoment erreicht und überschritten ist, verformt sich das Klemmelement 18 derart elastisch, dass die Überwurfmutter 14 relativ zu dem Ventilschaft 7 verdrehbar ist. Dadurch ist es dann möglich, die Überwurfmutter 14 bis zur Felge 2 aufzuschrauben, um das Reifenventil 4 auch von außen an der Felge 2 zu fixieren und die Montage abzuschließen. Nachstehend wird nun auf die einzelnen Ausführungsformen und deren Besonderheiten eingegangen, wobei vorstehende Ausführungen sich auf alle Ausführungsbeispiele gemeinsam beziehen.

Die Figuren 11 bis 14 zeigen in verschiedenen Darstellungen eine erste Ausführungsform eines Klemmelements 18 gemäß der vorliegenden Erfindung, wobei in den Figuren 11 und 12 die Überwurfmutter 14 gestrichelt dargestellt ist, um einen Einblick auf die im Inneren 23 der Überwurfmutter 14 angeordneten Teile zu geben. Das Klemmelement 18 umfasst bei der ersten Ausführungsform zwei Federstifte 25 (siehe Figuren 11, 12 und 14), die elastisch verformbar ausgebildet sind. Die Federstifte 25 sind quer zur Längsrichtung 24 bzw. Längsachse der Überwurfmutter 24 im Inneren 23 dieser angeordnet, wobei zu deren Befestigung im Inneren 23 entsprechende Aufnahmeausnehmungen 26 in der Innenfläche der Überwurfmutter 14 ausgebildet sind. Dabei sind die beiden Federstifte 25 derart voneinander beabstandet angeordnet, dass zwischen ihnen der gewindefreie Abschnitt 21 des Ventilschafts 7 angeordnet und festgeklemmt ist. Mit anderen Worten sind die Federstifte 25 in den ihnen zugeordneten Aufnahmeausnehmungen 26 in der Überwurfmutter 14 befestigt und klemmen den Ventilschaft 7 an sich gegenüberliegenden Umfangpositionen des Ventilschafts 7 zwischen sich drehfest ein. Erst wenn ein vorbestimmtes Montagedrehmoment erreicht wird, wird die zuvor drehfeste Verbindung zwischen der Überwurfmutter 14 und dem Ventilschaft 7 mittels der Federstifte 25 aufgelöst, indem diese sich elastisch verformen und gegenüber der zuvor drehfesten Verbindung zum Ventilschaft 7 nachgeben. Dadurch kann die Überwurfmutter 14 sich relativ zu dem Ventilschaft 7 drehen, damit die Überwurfmutter 14 an die Felge 2 angeschraubt werden kann, wodurch das Reifenventil 4 von außen an der Felge 2 fixiert 2 ist. Zum Schutz der Gewindeverbindung zwischen dem Gewinde der Überwurfmutter 14 und dem Gewindeabschnitt 15 des Reifenventils 4 ist auf der dem Reifendrucksensor 5 abgewandten Seite der Überwurfmutter 14 ein Dichtungsring 27 angeordnet, der auf den Ventilschaft 7 aufgeschoben ist. Dieser Dichtungsring 27 dichtet das Innere 23 der Überwurfmutter 14 gegenüber dem Äußeren ab, wohingegen die andere Längsöffnung der Überwurfmutter 14 dichtend an der Felge 2 mittels des Felgenschutzringes 17 anliegt.

Bei den nachstehend beschriebenen Ausführungsformen ist die Fixierungseinrichtung 22 eine in der Innenfläche 28 der Überwurfmutter 14 ausgebildete Stufe 29, wie es in Figur 15 in einer perspektivischen Schnittansicht der Überwurfmutter 14 für die weiteren Ausführungsformen gezeigt ist. An dieser Stufe 29 stützt sich das Klemmelement 18 der nachstehend beschriebenen Ausführungsformen ab, so dass das Klemmelement 18 nicht aus der Überwurfmutter 14 herausgedrückt wird, wenn der Ventilschaft 7 in die Überwurfmutter 14 eingesteckt und mit dem Klemmelement 18 verklemmt wird.

Die Figuren 16 bis 19 zeigen in verschiedenen Darstellungen ein Klemmelement 18 gemäß einer zweiten Ausführungsform. Das Klemmelement 18 ist als ein kreissegmentförmiges Einlegeteil 30 ausgebildet, welches neben der Stufe 29 innerhalb der Überwurfmutter 14 angeordnet ist. Wie zuvor beschrieben, so ist auch für diese Ausführungsform in Figur 17 die Überwurfmutter 14 gestrichelt dargestellt, wobei die Figuren 18 und 19 verschiedene Schnittansichten zeigen, aus denen der Aufbau und die Wirkungsweise des Klemmelements 18 gemäß der zweiten Ausführungsform hervorgeht. Das kreissegmentförmige Einlegeteil 30 erhält seine Elastizität dadurch, dass es sich nicht um einen geschlossenen Ring sondern lediglich um ein Ring- bzw. Kreissegment (Kreisbogen) handelt. Folglich erlaubt der Spalt 31 zwischen den freien Enden des Einlegeteils 30 eine elastische Verformung und Nachgiebigkeit des Klemmelements 18. Das Einlegeteil 30 stützt sich mit einem seiner beiden Längsränder an der Stufe 29 ab und liegt mit seiner Außenwandung 32 zumindest abschnittsweise an der Innenfläche 28 der Überwurfmutter 14 an, wobei dieses Anliegen bis zum vorbestimmten Montagedrehmoment eine drehfeste Verbindung zwischen Überwurfmutter 14 und Klemmelement 18 bildet, die bei Überschreiten des vorbestimmten Montagedrehmoments aufgehoben ist, weil das Klemmelement 18 bzw. das Einlegeteil 30 elastisch nachgibt und sich folglich die Überwurfmutter 14 relativ zu dem Einlegeteil 30 bzw. Klemmelement 18 drehen kann. Die Außenwandung 32 des Einlegeteils 30 wird von insgesamt vier Umfangswandabschnitten gebildet, zwischen denen drei radial nach innen gerichtete Federarme 33 angeordnet und ausgebildet sind. Die Federarme 33 klemmen den in die Überwurfmutter 14 eingesteckten Ventilschaft 7 mit seinem gewindefreien Abschnitt 21 fest, so dass eine drehfeste Verbindung zwischen Reifenventil 4 und Überwurfmutter 14 über das Klemmelement 18 hergestellt ist. Damit diese zuletzt genannte Verbindung ihre Drehfestigkeit auch bei Überschreiten des vorbestimmten Montagedrehmoments beibehält, ist ein jeweiliger Federarm 33 des Einlegeteils 30 bzw. Klemmelements 18 an seinem den Ventilschaft 7 festklemmenden Ende mit einer die Haftreibung mit dem Ventilschaft 7 erhöhenden Reibfläche 34 ausgestattet. Auch bei dieser zweiten Ausführungsform ist ein Dichtring 27 vorgesehen, welcher zwischen der Stufe 29 und dem Einlegeteil 30 angeordnet ist und das Innere 23 der Überwurfmutter 14 gegenüber der äußeren Umgebung abdichtet, um die Gewindeverbindung von Überwurfmutter 14 und Reifenventil 4 zu schützen.

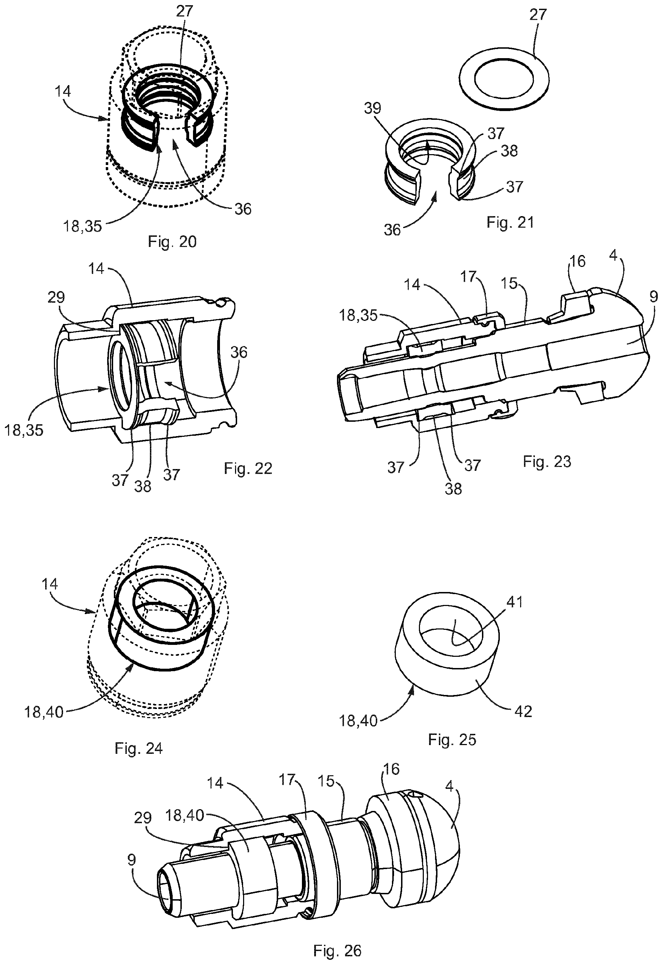

Eine dritte Ausführungsform eines Klemmelements 18 ist in den Figuren 20 bis 23 gezeigt. Auch dieses Klemmelement 18 ist als ein kreissegmentförmiges Einlegeteil 35 ausgebildet, welches neben der Stufe 29 innerhalb der Überwurfmutter 14 angeordnet ist. Das Einlegeteil 35 kann direkt an der Stufe 29 anliegen. Jedoch ist in dem dargestellten dritten Ausführungsbeispiel zwischen der Überwurfmutter 14 und der Stufe 29 ein Dichtungsring 27 angeordnet, der das Innere 23 der Überwurfmutter 14 gegenüber dem Äußeren abdichtet. An seinem Außenumfang weist das Einlegeteil 35 zwei stegförmige Ansätze 37 auf, die um den Außenumfang herum verlaufend ausgebildet sind und zwischen sich eine Ausnehmung 38 definieren. Bei der dritten Ausführungsform ist das Klemmelement 18 bzw. das Einlegeteil 35 mit seinem Innenumfang 39 in klemmender Weise auf den Ventilschaft 7 aufgeschoben und geht mit dem Ventilschaft 7 eine drehfeste Verbindung ein, welche auch dann Bestand hat, wenn das vorbestimmte Montagedrehmoment überschritten wird. Demgegenüber sind die zwei stegförmigen Ansätzen 37 an der Innenfläche 28 der Überwurfmutter 14 nur bis zudem vorbestimmten Montagedrehmoment mit der Überwurfmutter 14 klemmend und drehfest verbunden. Bei Überschreiten des vorbestimmten Montagedrehmoments wird die zuletzt genannte drehfeste Verbindung zwischen Überwurfmutter 14 und Klemmelement 18 aufgehoben, da die zwei stegförmigen Ansätze 37 nachgeben und sich elastisch verformen, wodurch die Überwurfmutter 14 relativ zu dem Reifenventil 4 drehbar ist und damit in Richtung der Felge 2 festgeschraubt werden kann.

Die Figuren 24 bis 26 zeigen schließlich eine vierte Ausführungsform eines Klemmelements 18 in verschiedenen Darstellungen. Das Klemmelement 18 der vierten Ausführungsform ist ein ringförmiges Einspritzteil bzw. Umspritzteil 40. Dieses ringförmige Einspritzteil 40 ist mit seinem Innenumfang 41 in klemmender Weise auf den Ventilschaft 7 aufgeschoben und geht mit diesem eine drehfeste Verbindung ein, welche dem vorbestimmten Montagedrehmoment Stand hält. Mit seinem Außenumfang 42 liegt das Einspritzteil 40 an der Innenfläche 28 der Überwurfmutter 14 bis zum vorbestimmten Montagedrehmoment an. Bei Erreichen des vorbestimmten Montagedrehmoments gibt das Einspritzteil 40 elastisch nach, so dass sich die Überwurfmutter 14 relativ zu dem Reifenventil 4 drehen kann und auf die Felge 2 aufgeschraubt werden kann.

Für alle vorstehend besprochenen Ausführungsformen ist vorgesehen, dass das vorbestimmte Montagedrehmoment wenigstens vier Newtonmeter beträgt. Dabei ist das Festschrauben des Schraubelements 14 zur Fixierung des Reifendrucksensors 5 bereits bei einem Drehmoment von etwa zwei bis zweieinhalb Newtonmeter abgeschlossen.

Soweit vorstehend bei den beschriebenen Ausführungsformen gleiche Bezugszeichen verwendet werden, betreffen diese jeweils identische oder gleiche Elemente oder Bauteile.

Zusammenfassend ist es der Kerngedanke der vorliegenden Erfindung, die Überwurfmutter 14 mit einem integrierten elastischen Federelement 18 für den Freilauf zwischen Überwurfmutter 14 und Ventilschaft 7 auszubilden. Bei der Montage wird die Überwurfmutter 14 auf den gewindefreien Abschnitt 21 des Ventilschafts 7 gesteckt und im Federelement bzw. Klemmelement 18 eingeklemmt. Beim Drehen der Überwurfmutter 14 wird zunächst das Schraubelement 12 mit dem Gehäuse der Radelektronik bzw. dem Reifendrucksensor 5 mit einem Drehmoment von 2,1 bis 2,5 Newtonmeter festverschraubt. Nach Erreichen der Endposition (Anschlag) und steigendem Drehmoment (4,0 bis 4,2 Newtonmeter) gibt das Klemmelement 18 nach, so dass die Überwurfmutter 14 relativ zu dem Klemmelement 18 gedreht werden kann, so dass die Überwurfmutter 14 von außen mit der Felge 2 festverschraubt wird.

## Patentansprüche

1. Reifendruckkontrollsystem (6) für ein Fahrzeug (1) zur Ermittlung reifenspezifischer Parameter, aufweisend:
einen an einer Felge (2) eines Luftreifens (3) des Fahrzeugs (1) anbringbaren Reifendrucksensor (5),
ein Reifenventil (4), welches einen Ventilschaft (7) mit einer längsverlaufenden Ventilbohrung (9) aufweist, die in einer kalottenartigen Stirnfläche (10) eines Ventilfußes (8) mündet,
ein Schraubelement (12), welches den Reifendrucksensor (5) und das Reifenventil (4) an dessen Ventilfuß (8) durch Eingreifen in die Ventilbohrung (9) verbindet, und
eine zur Fixierung des Reifenventils (4) an der Felge (2) dienende und auf einen Gewindeabschnitt (15) des Ventilschafts (7) aufgeschraubte Überwurfmutter (14),
**dadurch gekennzeichnet, dass** innerhalb der Überwurfmutter (14) zumindest ein elastisch verformbares Klemmelement (18) angeordnet ist, das einen gewindefreien Abschnitt (21) des Ventilschafts (7) einklemmt, wobei die Überwurfmutter (14) und der Ventilschaft (7) über das zumindest eine Klemmelement (18) bis zu einem vorbestimmten Montagedrehmoment drehfest miteinander verbunden sind und bei Überschreiten des vorbestimmten Montagedrehmoments sich das zumindest eine Klemmelement (18) derart elastisch verformt, dass die Überwurfmutter (14) relativ zu dem Ventilschaft (7) verdrehbar ist.

2. Reifendruckkontrollsystem (6) nach Anspruch 1, **dadurch gekennzeichnet, dass** im Inneren (23) der Überwurfmutter (14) eine eine Bewegung des zumindest einen Klemmelements (18) in wenigstens eine Längsrichtung (24) der Überwurfmutter (14) blockierende Fixierungseinrichtung (22) ausgebildet ist.

3. Reifendruckkontrollsystem (6) nach Anspruch 2, **dadurch gekennzeichnet, dass** die Fixierungseinrichtung (22) von Aufnahmeausnehmungen (26) gebildet ist und das zumindest eine Klemmelement (18) zwei Federstifte (25) umfasst, die in den Aufnahmeausnehmungen (26) befestigt sind und die den Ventilschaft (7) an sich gegenüberliegenden Umfangpositionen des Ventilschafts (7) zwischen sich drehfest einklemmen.

4. Reifendruckkontrollsystem (6) nach Anspruch 2, **dadurch gekennzeichnet, dass** die Fixierungseinrichtung (22) eine in der Innenfläche (28) der Überwurfmutter (14) ausgebildete Stufe (29) ist, an welcher sich das zumindest eine Klemmelement (18) abstützt.

5. Reifendruckkontrollsystem (6) nach Anspruch 4, **dadurch gekennzeichnet, dass** das zumindest eine Klemmelement (18) ein kreissegmentförmiges Einlegeteil (30), welches sich mit einem seiner beiden Längsränder an der Stufe (29) der Überwurfmutter (14) abstützt, und an dem kreissegmentförmigen Einlegeteil (30) radial nach innen gerichtete, den Ventilschaft (7) festklemmende und mit diesem eine drehfeste Verbindung eingehende Federarme (33) umfasst, wobei das Einlegeteil (30) mit seiner Außenwandung (32) bis zum vorbestimmten Montagedrehmoment an der Innenfläche (28) der Überwurfmutter (14) drehfest verbunden anliegt.

6. Reifendruckkontrollsystem (6) nach Anspruch 5, **dadurch gekennzeichnet, dass** ein jeweiliger Federarm (33) an seinem den Ventilschaft (7) festklemmenden Ende mit einer die Haftreibung mit dem Ventilschaft (7) erhöhenden Reibfläche (34) ausgestattet ist.

7. Reifendruckkontrollsystem (6) nach Anspruch 4, **dadurch gekennzeichnet, dass** das zumindest eine Klemmelement (18) ein kreissegmentförmiges Einlegeteil (35) ist, welches sich mit einem seiner beiden Längsränder an der Stufe (29) der Überwurfmutter (14) abstützt, wobei das Einlegeteil (35) zumindest zwei stegförmige Ansätze (37) aufweist, die um den Außenumfang herum verlaufend ausgebildet sind und zwischen sich eine Ausnehmung (38) definieren.

8. Reifendruckkontrollsystem (6) nach Anspruch 7, **dadurch gekennzeichnet, dass** das zumindest eine Klemmelement (18) mit seinem Innenumfang (39) in klemmender Weise auf den Ventilschaft (7) mit diesem eine drehfeste Verbindung eingehend aufgeschoben ist und mit seinen zumindest zwei stegförmigen Ansätzen (37) an der Innenfläche (28) der Überwurfmutter (14) bis zum vorbestimmten Montagedrehmoment mit dieser drehfest verbunden anliegt.

9. Reifendruckkontrollsystem (6) nach Anspruch 5 oder 7, **dadurch gekennzeichnet, dass** zwischen der Stufe (29) der Überwurfmutter (14) und dem kreissegmentförmigen Einlegeteil (30, 35) ein das Innere der Überwurfmutter (14) zu der dem Reifendrucksensor (5) abgewandten Seite abdichtender Dichtungsring (27) angeordnet ist, der auf den Ventilschaft (7) aufgeschoben ist.

10. Reifendruckkontrollsystem (6) nach Anspruch 4, **dadurch gekennzeichnet, dass** das zumindest eine Klemmelement (18) ein ringförmiges Einspritzteil (40) ist, welches mit seinem Innenumfang (41) in klemmender Weise auf den Ventilschaft (7) mit diesem eine drehfeste Verbindung eingehend aufgeschoben ist und mit seinem Außenumfang (42) an der Innenfläche (28) der Überwurfmutter (14) bis zum vorbestimmten Montagedrehmoment mit dieser drehfest verbunden anliegt.

## Claims

1. Tyre pressure control system (6) for a vehicle (1) for determining tyre-specific parameters, comprising:
a tyre pressure sensor (5) attachable to a rim (2) of a pneumatic tyre (3) of the vehicle (1),
tyre valve (4) having a valve stem (7) with a longitudinal valve bore (9) opening in a dome-shaped end face (10) of a valve base (8),
a screw member (12) which connects the tyre pressure sensor (5) and the tyre valve (4) to the valve base (8) thereof by engaging with the valve bore (9), and
a union nut (14) which serves to fix the tyre valve (4) to the rim (2) and is screwed onto a threaded portion (15) of the valve stem (7),
**characterized in that**
at least one elastically deformable clamping element (18) is arranged inside the union nut (14) and clamps a non-threaded portion (21) of the valve stem (7), wherein
the union nut (14) and the valve stem (7) are connected to each other in torque-resistant manner to a predetermined mounting torque via the at least one clamping element (18), and when the predetermined assembly torque is exceeded the at least one clamping element (18) is elastically deformed in such manner that the union nut (14) is rotatable relative to the valve stem (7).

2. Tyre pressure control system (6) according to Claim 1, **characterized in that** a fixing device (22) which blocks a movement of the at least one clamping element (18) in at least one longitudinal direction (24) of the union nut (14) is formed in the interior (23) of the union nut (14).

3. Tyre pressure control system (6) according to Claim 2, **characterized in that** the fixing device (22) is formed by receiving recesses (26), and the at least one clamping element (18) comprises two spring pins (25) which are fixed in the receiving recesses (26) and which clamp the valve stem (7) between themselves in torque-resistant manner at opposing circumferential positions of the valve stem (7).

4. Tyre pressure control system (6) according to Claim 2, **characterized in that** the fixing device (22) is a shoulder (29) formed in the inner surface (28) of the union nut (14), on which the at least one clamping element (18) is supported.

5. Tyre pressure control system (6) according to Claim 4, **characterized in that** the at least one clamping element (18) is a circular segment-shaped insert (30) which is supported by one of its longitudinal edges on the shoulder (29) of the union nut (14) and comprises radially inwardly directed spring arms (33) on the circular segment-shaped insert (30) which clamp the valve stem (7) in fixed manner and engage in a torque-resistant connection therewith, wherein the insert (30) bears with its outer wall (32) on the inner surface (28) of the union nut (14) and is fixed thereto in torque-resistant manner up to the predetermined mounting torque.

6. Tyre pressure control system (6) according to Claim 5, **characterized in that** the end of each spring arm (33) which fixedly clamps the valve stem (7) is equipped with a friction surface (34) which increases the static friction with the valve stem (7).

7. Tyre pressure control system (6) according to Claim 4, **characterized in that** the at least one clamping element (18) is a circular segment-shaped insert (35) which is supported by one of its longitudinal edges on the shoulder (29) of the union nut (14), wherein the insert (35) has at least two ridge-like projections (37) which are constructed to extend around the outer circumference and between them define a recess (38).

8. Tyre pressure control system (6) according to Claim 7, **characterized in that** the inner circumference (39) of the at least one clamping element (18) is thrust against the valve stem (7) in clamping manner, thus engaging in an intensive torque-resistant connection therewith, and the at least two ridge-like projections (37) thereof bear on the inner surface (28) of the union nut (14) and are fixed thereto in torque-resistant manner up to the predetermined mounting torque.

9. Tyre pressure control system (6) according to Claim 5 or 7, **characterized in that** a seal ring (27) which seals the interior of the union nut (14) off from the side facing away from the tyre pressure sensor (5) is arranged between the shoulder (29) of the union nut (14) and the circular segment-shaped insert (30, 35) and is pushed onto the valve stem (7).

10. Tyre pressure control system (6) according to Claim 4, **characterized in that** the at least one clamping element (18) is an annular insert (40) which pushed onto the valve stem (7) so that its inner circumference (41) clamps said valve stem, engaging in a torque-resistant connection therewith, and its outer circumference (42) bears on the inner surface (28) of the union nut (14) and is fixed thereto in torque-resistant manner up to the predetermined mounting torque.

## Revendications

1. Système de contrôle de pression de pneu (6) pour un véhicule automobile (1) destiné à la détermination de paramètres spécifiques au pneu, comportant :
un capteur de pression de pneu (5) pouvant être monté sur une jante (2) d'un pneumatique (3) du véhicule automobile (1),
une valve de pneu (4), laquelle comporte un corps de valve (7) avec un trou de valve (9) passant longitudinalement, qui débouche dans une surface avant (10) en forme de calotte d'une embase de valve (8),
un élément à visser (12), lequel relie le capteur de pression de pneu (5) et la valve de pneu (4) au pied de valve (8) de celle-ci par pénétration dans le trou de valve (9), et
un écrou de raccordement (14) servant à la fixation de la valve de pneu (4) sur la jante (2) et vissé sur une section filetée (15) du corps de valve (7),
**caractérisé en ce qu'**
à l'intérieur de l'écrou de raccordement (14) est disposé au moins un élément de serrage (18) pouvant être élastiquement déformé, qui enserre une section non filetée (21) du corps de valve (7),
sachant que l'écrou de raccordement (14) et le corps de valve (7) sont reliés l'un à l'autre solidaires en rotation par au moins un élément de serrage (18) jusqu'à un couple de montage prédéfini et qu'en cas de dépassement du couple de serrage prédéfini, au moins un élément de serrage (18) se déforme élastiquement de telle manière que l'écrou de raccordement (14) peut être tourné par rapport au corps de valve (7).

2. Système de contrôle de pression de pneu (6) selon la revendication 1, **caractérisé en ce qu'**à l'intérieur de l'écrou d'accouplement (14) est constitué un dispositif de fixation (22) bloquant un mouvement d'au moins un élément de serrage (18) dans au moins une direction longitudinale (24) de l'écrou d'accouplement (14).

3. Système de contrôle de pression de pneu (6) selon la revendication 2, **caractérisé en ce que** le dispositif de fixation (22) est formé d'évidements de réception (26) et au moins un élément de serrage (18) comprend deux tiges à ressort (25), qui sont fixées dans les évidements de réception (26) et qui enserrent solidairement en rotation entre elles le corps de valve (7) sur des positions périphériques s'opposant du corps de valve (7).

4. Système de contrôle de pression de pneu (6) selon la revendication 2, **caractérisé en ce que** le dispositif de fixation (22) est un gradin (29) constitué dans la surface intérieure (28) de l'écrou de raccordement (14), sur lequel s'appuie au moins un élément de serrage (18).

5. Système de contrôle de pression de pneu (6) selon la revendication 4, **caractérisé en ce qu'**au moins un élément de serrage (18) comprend une pièce d'insertion (30) en forme de segment de cercle, laquelle s'appuie avec un de ses deux bords longitudinaux sur le gradin (29) de l'écrou de raccordement (14), et sur la pièce d'insertion (30) en forme de segment de cercle, des bras à ressort (33) dirigés radialement vers l'intérieur bloquant fermement le corps de valve (7) et engendrant avec celui-ci une liaison solidaire en rotation, sachant que la pièce d'insertion (30) s'applique reliée solidairement en rotation avec sa paroi extérieure (32) sur la surface intérieure (28) de l'écrou de raccordement (14) jusqu'au couple de montage prédéfini.

6. Système de contrôle de pression de pneu (6) selon la revendication 5, **caractérisé en ce qu'**un bras à ressort (33) respectif est doté à son extrémité serrant fermement le corps de valve (7) d'une surface de frottement (34) augmentant l'adhérence par frottement avec le corps de valve (7) .

7. Système de contrôle de pression de pneu (6) selon la revendication 4, **caractérisé en ce qu'**au moins un élément de serrage (18) est une pièce d'insertion (35) en forme de segment de cercle, laquelle s'appuie avec ses deux bords longitudinaux sur le gradin (29) de l'écrou de raccordement (14), sachant que la pièce d'insertion (35) comporte au moins deux saillies (37) en forme de nervure, qui sont constituées passant autour de la périphérie extérieure et définissent un évidement (38) entre elles.

8. Système de contrôle de pression de pneu (6) selon la revendication 7, **caractérisé en ce qu'**au moins un élément de serrage (18) est enfilé avec sa périphérie intérieure (39) en mode de serrage sur le corps de valve (7) engendrant une liaison solidaire en rotation avec celui-ci et s'applique avec ses au moins deux saillies (37) en forme de nervure à la surface intérieure (28) de l'écrou de raccordement (14) relié solidaire en rotation avec celui-ci jusqu'au couple de montage prédéfini.

9. Système de contrôle de pression de pneu (6) selon la revendication 5 ou 7, **caractérisé en ce qu'**entre le gradin (29) de l'écrou de raccordement (14) et la pièce d'insertion (30, 35) en forme de segment de cercle est disposée une bague d'étanchéité (27) étanchéifiant l'intérieur de l'écrou de raccordement (14) par rapport au côté opposé au capteur de pression de pneu (5), qui est enfilée sur le corps de valve (7) .

10. Système de contrôle de pression de pneu (6) selon la revendication 4, **caractérisé en ce qu'**au moins un élément de serrage (18) est une pièce moulée par injection (40), laquelle est enfilée avec sa périphérie intérieure (41) en mode de serrage sur le corps de valve (7) engendrant avec celui-ci une liaison solidaire en rotation et s'applique avec sa périphérie extérieure (42) à la surface intérieure (28) de l'écrou de raccordement (14) reliée solidaire en rotation avec celui-ci jusqu'au couple de montage prédéfini.
